# EUROPÄISCHE PATENTANMELDUNG

(11) **EP 3 974 669 A1**
(43) Veröffentlichungstag der Anmeldung: **30.03.2022**
(21) Anmeldenummer: 20198055.4
(22) Anmeldetag: 24.09.2020
(51) Int. Cl.: F16C 33/10, F16C 17/02

(54) **GLEITLAGERBUCHSE FÜR GLEITLAGER MIT GESTEIGERTER TRAGFÄHIGKEIT**

(71) Anmelder: Flender GmbH, 46395 Bocholt (DE)
(72) Erfinder: Leuer, Philipp, 45130 Essen (DE); Prusak, Robert, 45891 Gelsenkirchen (DE); Schlegel, Eugen, 46117 Oberhausen (DE)
(74) Vertreter: Michalski Hüttermann & Partner Patentanwälte mbB

(57) **Zusammenfassung**

Die Erfindung betrifft eine Gleitlagerbuchse (10), die einen zylindrischen Grundkörper (11) mit einer ersten Mantelfläche (12) und einer zweiten Mantelfläche (14) umfasst. Die Gleitlagerbuchse (10) weist eine Mehrzahl an Austauschbohrungen (20) für einen Schmierstoff (30) auf, wobei zumindest eine der Austauschbohrungen (20) an der ersten Mantelfläche (12) einen ersten Durchmesser (27) und an der zweiten Mantelfläche (14) einen zweiten Durchmesser (29) aufweist. Erfindungsgemäß ist, dadurch gekennzeichnet, dass der zweite Durchmesser (29) zu einer Steigerung einer Tragfähigkeit (56) der Gleitlagerbuchse (10) größer ist als der erste Durchmesser (27). Die Erfindung betrifft auch ein Gleitlager (40), das mit einer solchen Gleitlagerbuchse (10) ausgestattet ist und ein Planetengetriebe (50), das über ein solches Gleitlager (40) verfügt. Ebenso betrifft die Erfindung eine Windkraftanlage (60) und eine Industrie-Applikation (70) mit einem solchen Planetengetriebe (50). Ferner betrifft die Erfindung ein Computerprogrammprodukt (80), mit dem ein Betriebsverhalten einer erfindungsgemäßen Gleitlagerbuchse (10) simulierbar ist.

## Beschreibung

Die Erfindung betrifft eine Gleitlagerbuchse, durch die eine Tragfähigkeit eines Gleitlagers steigerbar ist. Die Erfindung betrifft ebenso ein entsprechendes Gleitlager und ein Planetengetriebe, das mit einem solchen Gleitlager ausgestattet ist. Ferner betrifft die Erfindung eine Windkraftanlage und eine Industrie-Applikation, die jeweils über ein solches Planetengetriebe verfügen. Gleichermaßen betrifft die Erfindung ein Computerprogrammprodukt, mit dem das Betriebsverhalten einer entsprechenden Gleitlagerbuchse simulierbar ist.

Die Druckschrift DE 29 45 821 A1 offenbart ein Lager, das einen Lagerkörper umfasst, in dem drehbar eine schwimmende Buchse angeordnet ist. In der schwimmenden Buchse ist eine Welle drehbar aufgenommen. In der schwimmenden Buchse sind radial ausgerichtete Kanäle ausgebildet, durch die Öl zuführbar ist. Die Kanäle sind auf einer der Ölzufuhr zugewandten Seite geweitet ausgebildet.

Aus der Offenlegungsschrift DE 35 37 449 A1 ist eine Lagerung mit schwimmenden Büchsen bekannt, die über radiale Bohrungen verfügen, über die Öl in Richtung einer drehbar gelagerten Welle zuführbar ist. Die radialen Bohrungen sind dabei an einem der Ölzufuhr zugewandten Ende geweitet ausgebildet.

Gleitlager werden in einer Vielzahl an Anwendungen eingesetzt, die eine hohe Lagertragfähigkeit, minimale Lagerreibungsverluste und hohe Lagerlebensdauer erfordern. Ebenso wird eine einfache und kosteneffiziente Herstellung solcher Gleitlager angestrebt. Es besteht Bedarf an einem Gleitlager, das in zumindest einer der beschriebenen Zielsetzungen eine Verbesserung bietet.

Die Aufgabenstellung wird durch eine erfindungsgemäße Gleitlagerbuchse gelöst, die einen zylindrischen Grundkörper umfasst. Der zylindrische Grundkörper weist eine erste Mantelfläche und eine zweite Mantelfläche auf. Die erste und zweite Mantelfläche sind über eine Mehrzahl an Versorgungsbohrungen miteinander verbunden, so dass ein Schmierstoff durch eine Versorgungsbohrung von der ersten zur zweiten Mantelfläche und umgekehrt gelangen kann. Zumindest eine der Austauschbohrungen weist an der ersten Mantelfläche einen ersten Durchmesser auf und an einer zweiten Mantelfläche einen zweiten Durchmesser. Der Durchmesser ist dabei als eine Abmessung im Wesentlichen senkrecht zu einer Strömungsrichtung des Schmierstoffs zu verstehen. Der zweite Durchmesser ist erfindungsgemäß größer als der erste Durchmesser. Dadurch ist eine Strömungsgeschwindigkeit des Schmierstoffs an der zweiten Mantelfläche geringer als an der ersten Mantelfläche. Ferner liegt in Bereichen der Austauschbohrungen mit dem zweiten Durchmesser ein erhöhter Strömungswiderstand vor. Infolgedessen liegt eine höhere Schleppwirkung des Schmierstoffs auf die Gleitlagerbuchse vor. Durch die gesteigerte Schleppwirkung wiederum ist eine gesteigerte Schmierspalthöhe erzielbar. Durch den zweiten Durchmesser, der größer ist als der erste Durchmesser, wird somit eine gesteigerte Tragfähigkeit des Gleitlagers erzielt, in dem die Gleitlagerbuchse einzusetzen ist. Austauschbohrungen mit unterschiedlichen Durchmessern an der ersten und zweiten Mantelfläche sind in einfacher Weise herstellbar. Durch die veränderte Geometrie wird die Schleppwirkung erhöht und die Tragfähigkeit gesteigert.

In einer Ausführungsform der beanspruchten Gleitlagerbuchse ist die erste Mantelfläche eine Seite der Gleitlagerbuchse, die einer Schmierstoffzufuhr zugewandt ist. Dementsprechend ist die zweite Mantelfläche eine Seite der Gleitlagerbuchse, die der Schmierstoffzufuhr abgewandt ist. Im bestimmungsgemäßen Betrieb ist der Schmierstoff durch die Austauschbohrungen von der ersten zur zweiten Mantelfläche leitbar. An der zweiten Mantelfläche ist im bestimmungsgemäßen Betrieb eines Gleitlagers, das mit der beanspruchten Gleitlagerbuchse ausgestattet ist, der Schmierspalt des Gleitlagers ausgebildet. Durch den zweiten Durchmesser, der zumindest einen Austauschbohrung an der zweiten Mantelfläche wird im Schmierstoff ein Flüssigkeitswiderstand gesteigert, durch den mehr Schmierstoff in den Schmierspalt gefördert wird. Der Schmierspalt kann als Innenschmierspalt und/oder als Außenschmierspalt ausgebildet. Bei einem Innenschmierspalt und einem Außenschmierspalt wird die Schmierfilmhöhe in beiden gesteigert. Dadurch wird die Wirkung der beanspruchten Gleitlagerbuchse in gesteigertem Maße erzielt.

Des Weiteren kann der zweite Durchmesser durch eine Ansenkung und/oder eine Stufenbohrung ausgebildet sein. Durch eine Ansenkung, die im Wesentlichen konusförmig ausgebildet ist, ist die Strömungsgeschwindigkeit des Schmierstoffs im Wesentlichen kontinuierlich verringerbar. Ansenkungen sind in einfacher Weise durch Kegelsenker präzise und kosteneffizient herstellbar. Eine Stufenbohrung, also eine Austauschbohrung mit abschnittsweise unterschiedlichen Durchmessern, ist ebenfalls schnell und kosteneffizient herstellbar. Bohrungen unterschiedlicher Durchmesser sind mit erhöhter Präzision herstellbar, so dass, abhängig von einem Verhältnis zwischen dem ersten und zweiten Durchmesser, eine Verringerung der Strömungsgeschwindigkeit des Schmierstoffs entsprechend präzise einstellbar ist. Die beanspruchte Gleitlagerbuchse ist somit in einfacher Weise an unterschiedliche Anwendungsfälle anpassbar. Ebenso können eine Ansenkung und eine Stufenbohrung kombiniert werden und so deren jeweilige Vorteile kombiniert zu erzielen.

In einer weiteren Ausführungsform der beanspruchten Gleitlagerbuchse ist die zumindest eine Austauschbohrung axial versetzt zu einer Schmierstoffzufuhröffnung angeordnet. Unter einer Axialrichtung ist dabei eine Richtung im Wesentlichen parallel zu einer Hauptdrehachse der Gleitlagerbuchse zu verstehen. Die Schmierstoffzufuhröffnung ist in einer der Gleitlagerbuchse gegenüberliegenden Komponente des Gleitlagers ausgebildet. Schmierstoff, der durch die zumindest eine Austauschbohrung geleitet wird, fließt daher vor Erreichen der zumindest einen Austauschbohrung an der ersten Mantelfläche entlang. Die Austauschbohrungen sind dementsprechend derart angeordnet, dass Schmierstoff flächig auf der zweiten Mantelfläche abgegeben wird. Insbesondere können die Austauschbohrungen axial versetzt zu Hauptbohrungen sein, die einen größeren Durchmesser aufweisen als die Austauschbohrungen und die einer Schmierstoffzufuhröffnung im Wesentlichen gegenüberliegend angeordnet sind.

Darüber hinaus können zwei axial beabstandete Austauschbohrungen an der zweiten Mantelfläche durch eine Taschenvertiefung miteinander verbunden sein. Im Bereich der Taschenvertiefung wird die Strömungsgeschwindigkeit des Schmierstoffs weiter verringert und stellt einen zusätzlichen Strömungswiderstand dar, so dass die Schleppwirkung auf die Gleitlagerbuchse weiter erhöht wird. Die Taschenvertiefungen können durch Fräsen, Ätzen oder Erodieren hergestellt werden. Die Tragfähigkeit der beanspruchten Gleitlagerbuchse wird mittels Taschenvertiefungen weiter gesteigert. Ferner können mehrere Taschenvertiefungen auf der zweiten Mantelfläche ausgebildet sein, die umlaufend zu einem Pfeilmuster oder Bogenmuster angeordnet sein können. Beispielsweise können die Taschenvertiefungen derart ausgerichtet sein, dass in einem mittleren Bereich der Gleitlagerbuchse auf der zweiten Mantelfläche eine Pfeilspitze angedeutet ist, die in oder gegen Umlaufrichtung weist. Das Pfeilmuster kann entlang einer bestimmungsgemäßen Drehrichtung der Gleitlagerbuchse oder entgegen dieser ausgebildet sein. Dadurch ist eine verbesserte Schmierstoffversorgung an der zweiten Mantelfläche erzielbar und ein gleichmäßiger Lauf der Gleitlagerbuchse gewährleistbar.

In einer weiteren Ausführungsform der beanspruchten Gleitlagerbuchse kann der zweite Durchmesser der Austauschbohrung dem 1,05-fachen bis 6,00-fachen des ersten Durchmessers entsprechen. Dadurch wird an der zweiten Mantelfläche eine vorteilhafte Verringerung der Strömungsgeschwindigkeit des Schmierstoffs erzielt, und ein Strömungswiderstand erzeugt. Dadurch wiederum wird eine entsprechende Steigerung der Schleppwirkung des Schmierstoffs auf die Gleitlagerbuchse hervorrufen. Gleichzeitig bietet ein entsprechender zweiter Durchmesser weiterhin einen ruhigen Lauf für die beanspruchte Gleitlagerbuchse.

Ferner kann die beanspruchte Gleitlagerbuchse als Schwimmbuchse ausgebildet sein. Die Schwimmbuchse ist zwischen einer stationären und einer rotierenden Komponente des Gleitlagers angeordnet und bildet mit diesen einen Innenschmierspalt und einen Außenschmierspalt aus. Infolge der gesteigerten Schleppwirkung, die auf im bestimmungsgemäßen Betrieb die Gleitlagerbuchse ausgeübt wird, folgt dieser schneller einer Drehbewegung der rotierenden Komponente. Die Schmierspalthöhe im Innenschmierspalt und/oder im Außenschmierspalt wird so gesteigert, und damit auch die Tragfähigkeit des Gleitlagers. Dadurch, dass bei einer Schwimmbuchse ein Innenschmierspalt und ein Außenschmierspalt vorliegt, wird durch die beanspruchte Gleitlagerbuchse eine besonders gesteigerte Tragfähigkeit erzielt. Insbesondere wird die Dämpfungswirkung in den Schmierspalten verbessert und eine verbesserte Lastaufteilung bei Achsabstandsabweichungen erzielt. Ebenso wird ein verbesserten Anfahrverhalten nach Stillstand erreicht und die Temperatur im Betrieb reduziert.

In einer weiteren Ausführungsform der beanspruchten Gleitlagerbuchse umfasst die zumindest eine Austauschbohrung einen Auslassabschnitt, der zumindest abschnittsweise den zweiten Durchmesser aufweist. Der Auslassabschnitt mündet an der zweiten Mantelfläche. Der Auslassabschnitt weist eine Länge auf, die 10% bis 100% einer Bohrlänge der Austauschbohrung ausmacht. Korrespondierend dazu umfasst die zumindest eine Austauschbohrung einen Einlassabschnitt, der sich ausgehend von der ersten Mantelfläche durch die Gleitlagerbuchse erstreckt und in den Auslassabschnitt übergeht bzw. an diesen angrenzt. Im Einlassabschnitt weist die zumindest eine Austauschbohrung den ersten Durchmesser auf. Je länger der Auslassabschnitt ist, umso stärker ist die Strömungsgeschwindigkeit des Schmierstoffs reduzierbar und gleichzeitig Wirbelbildung im Schmierstoff vermieden. Dementsprechend ist eine gleichmäßige Abgabe des Schmierstoffs an der zweiten Mantelfläche erreichbar. Dies gilt sowohl für Auslassabschnitte mit dem zweiten Durchmesser, die durch eine Ansenkung, also auch durch eine Stufenbohrung ausgebildet sind.

Darüber hinaus kann die Ansenkung, durch die der zweite Durchmesser, der zumindest einen Austauschbohrung ausgebildet ist, einen Öffnungswinkel aufweisen, der 45° bis 135° beträgt. Dadurch wird eine besonders vorteilhafte Verringerung der Strömungsgeschwindigkeit des Schmierstoffs erreicht. Derartige Öffnungswinkel sind in einfacher Weise durch entsprechend geformte Kegelsenker schnelle und kosteneffizient herstellbar.

Die zugrundeliegende Aufgabenstellung wird auch durch ein erfindungsgemäßes Gleitlager gelöst. Das Gleitlager umfasst eine rotierende Komponente, die drehbar an einer Gleitlagerbuchse angeordnet ist. Ebenfalls umfasst das Gleitlager eine stationäre Komponente. Die Gleitlagerbuchse ist erfindungsgemäß nach einer der oben dargestellten Ausführungsformen ausgebildet. Durch die Verwendung einer derartigen Gleitlagerbuchse weist das Gleitlager eine gesteigerte Tragfähigkeit auf. Insbesondere kann das beanspruchte Gleitlager eine Sommerfeldzahl von 0,10 bis 10,00 aufweisen. Das beanspruchte Gleitlager bietet damit eine Tragfähigkeit, und folglich auch eine Tragfähigkeitsreserve, die anspruchsvolle Einsatzgebiete erschließt, beispielsweise in Planetengetrieben von Gesteinsbrechern oder Zementmühlen.

Des Weiteren wird die eingangs skizzierte Aufgabe durch ein erfindungsgemäßes Planetengetriebe gelöst. Das Planetengetriebe umfasst einen Planetenträger, an dem eine Mehrzahl an Planetenrädern drehbar angebracht ist. Die Planetenräder sind dabei jeweils mittels eines Gleitlagers drehbar am Planetenträger gelagert. Erfindungsgemäß ist zumindest eines der Gleitlager gemäß einer der oben dargestellten Ausführungsformen ausgebildet.

Gleichermaßen wird die zugrundeliegende Aufgabenstellung durch eine erfindungsgemäße Windkraftanlage gelöst. Die Windkraftanlage umfasst eine Gondel, an der drehbar ein Mehrblattrotor angeordnet ist. In der Gondel ist ein Antriebsstrang angeordnet, zu dem ein Planetengetriebe gehört, das drehmomentübertragend mit dem Mehrblattrotor und einem Generator verbunden ist. Das Planetengetriebe ist erfindungsgemäß nach einer der oben angegebenen Ausführungsformen ausgebildet.

Die Aufgabenstellung wird genauso durch eine erfindungsgemäße Industrie-Applikation gelöst, die eine Antriebseinheit und eine Abtriebseinheit umfasst. Die Antriebseinheit und die Abtriebseinheit sind über ein Planetengetriebe drehmomentübertragend miteinander verbunden. Die Antriebseinheit, ist beispielswiese als Elektromotor, Verbrennungsmotor oder Hydraulikmotor ausgebildet und stellt Antriebsleistung bereit, die über das Planetengetriebe zur Abtriebseinheit zu übertragen ist. Die Abtriebseinheit kann beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Die Abtriebseinheit ist hierzu über das Planetengetriebe mit der Antriebseinheit verbunden. Das Getriebe ist erfindungsgemäß nach einer der oben skizzierten Ausführungsformen ausgebildet. Das erfindungsgemäße Planetengetriebe weist durch die beanspruchte Gleitlagerbuchse eine erhöhte Beanspruchbarkeit und Zuverlässigkeit auf. Dadurch ist der Wartungsaufwand für das Planetengetriebe verringert, was wiederum die Wirtschaftlichkeit der erfindungsgemäßen Industrie-Applikation steigert.

Ebenso wird die eingangs beschriebene Aufgabe durch ein erfindungsgemäßes Computerprogrammprodukt gelöst, durch das ein Betriebsverhalten einer Gleitlagerbuchse in einem Gleitlager simulierbar ist. Dabei wird zumindest ein Schmierspalt, beispielsweise ein Innenschmierspalt und/oder ein Außenschmierspalt simuliert, der durch eine Drehbewegung am Gleitlager ausgebildet wird. Insbesondere ist dabei die vorliegende Schmierspalthöhe in Abhängigkeit vom vorliegenden Betriebszustand simulierbar. Das Computerprogrammprodukt kann dazu lauffähige Simulationsroutinen für fluiddynamische Mechanismen umfassen und Datenschnittstellen, über die Betriebsparameter, wie eine Drehzahl, eine Temperatur des Schmierstoffs oder eine Radialbeanspruchung des Gleitlagers vorgebbar sind, oder ein Simulationsresultat ausgebbar ist. Das Computerprogrammprodukt umfasst einen Datensatz, durch den zumindest die Gleitlagerbuchse abgebildet ist. Erfindungsgemäß ist die Gleitlagerbuchse gemäß einer der oben skizzierten Ausführungsformen ausgebildet. Mittels des erfindungsgemäßen Computerprogrammprodukts ist vorhersagbar oder zumindest plausibilisierbar, welche Tragfähigkeit im Gleitlager mit der Gleitlagerbuchse vorliegt. Ferner ist die erfindungsgemäße Gleitlagerbuchse in puncto Auslegung mittels des erfindungsgemäßen Computerprogrammprodukts anpassbar und das Gleitlager so ohne Weiteres optimierbar. Das Computerprogrammprodukt kann dazu beispielsweise als sogenannter Digitaler Zwilling ausgebildet sein. Derartige Digitale Zwillinge sind beispielsweise in der Offenlegungsschrift US 2017/286572 A1 dargestellt. Der Offenbarungsgehalt von US 2017/286572 A1 wird durch Verweisung in die vorliegende Anmeldung mit einbezogen.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: eine erste Ausführungsform der beanspruchten Gleitlagerbuchse in einer Schrägansicht;
- FIG 2: die erste Ausführungsform der beanspruchten Gleitlagerbuchse im Längsschnitt;
- FIG 3: die erste Ausführungsform der beanspruchten Gleitlagerbuchse in einer geschnittenen Detailansicht;
- FIG 4: eine zweite Ausführungsform der beanspruchten Gleitlagerbuche in einer geschnittenen Detailansicht;
- FIG 5: schematisch einen Aufbau einer Ausführungsform des beanspruchten Gleitlagers mit einer Gleitlagerbuchse in einer dritten Ausführungsform;
- FIG 6: den Aufbau einer Ausführungsform der beanspruchten Windkraftanlage in einer geschnittenen Schrägansicht;
- FIG 7: den Aufbau einer Ausführungsform der beanspruchten Industrie-Applikation.

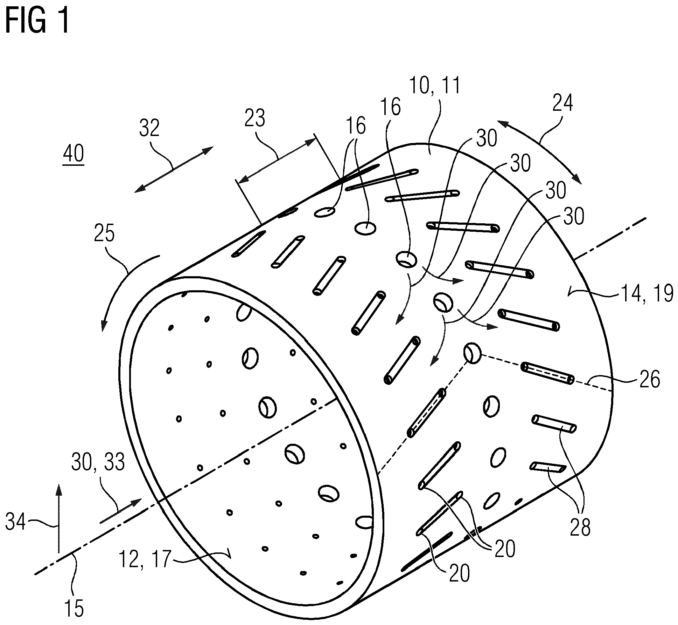

In FIG 1 ist eine erste Ausführungsform der beanspruchten Gleitlagerbuchse 10 abgebildet. Die Gleitlagerbuchse 10 umfasst einen im Wesentlichen zylindrischen Grundkörper 11, der eine erste Mantelfläche 12 aufweist, die als Innenfläche 17 ausgebildet ist. Korrespondierend dazu weist die Gleitlagerbuchse 10 auch eine zweite Mantelfläche 14 auf, die als Au-ßenfläche 19 ausgebildet ist. Die Gleitlagerbuchse 10 ist ein einem Gleitlager 40 einsetzbar, bei dessen Betrieb eine Drehbewegung 25 um eine Hauptdrehachse 15 erfolgt. Die Hauptdrehachse 15 stellt auch eine Symmetrieachse der Gleitlagerbuchse 10 dar. Die Gleitlagerbuchse 10 wird im Betrieb des Gleitlagers 40 mit einem Schmierstoff 30 versorgt. Der Schmierstoff 30 wird aufseiten der ersten Mantelfläche 12, also der Innenseite 17, über eine Schmierstoffzufuhr 33 bereitgestellt und über Hauptbohrungen 16 zur zweiten Mantelfläche 14, also die Außenfläche 19, transportiert. Die Hauptbohrungen 16 sind im Wesentlichen gleichmäßig beabstandet umlaufend an der Gleitlagerbuchse 10 in einem axial mittleren Bereich 23 ausgebildet. Entlang einer Axialrichtung 32 beabstandet weist die Gleitlagerbuchse 10 eine Mehrzahl an Austauschbohrungen 20 auf, die insgesamt geringere Durchmesser aufweisen als die Hauptbohrungen 16. Die Austauschbohrungen 20 sind auch in Umfangsrichtung 24 im Wesentlichen gleichmäßig beabstandet ausgebildet. Ferner sind die Austauschbohrungen 16 derart angeordnet, dass sie im Zusammenspiel mit je einer Hauptbohrung 16 ein Pfeilmuster 26 ausbilden. Korrespondierend zum Pfeilmuster 28 sind paarweise zwei Austauschbohrungen 20 an der zweiten Mantelfläche 14 durch Taschenvertiefungen 28 miteinander verbunden. Im Betrieb des Gleitlagers 40 sind die Austauschbohrungen 20 dazu ausgebildet, einen Durchtritt von Schmierstoff 30 in Radialrichtung 34 zu erlauben, so dass die zweite Mantelfläche 14 mit Schmierstoff 30 benetzt wird. Das Benetzen der zweiten Mantelfläche 14 wird durch die Taschenvertiefungen 28 unterstützt.

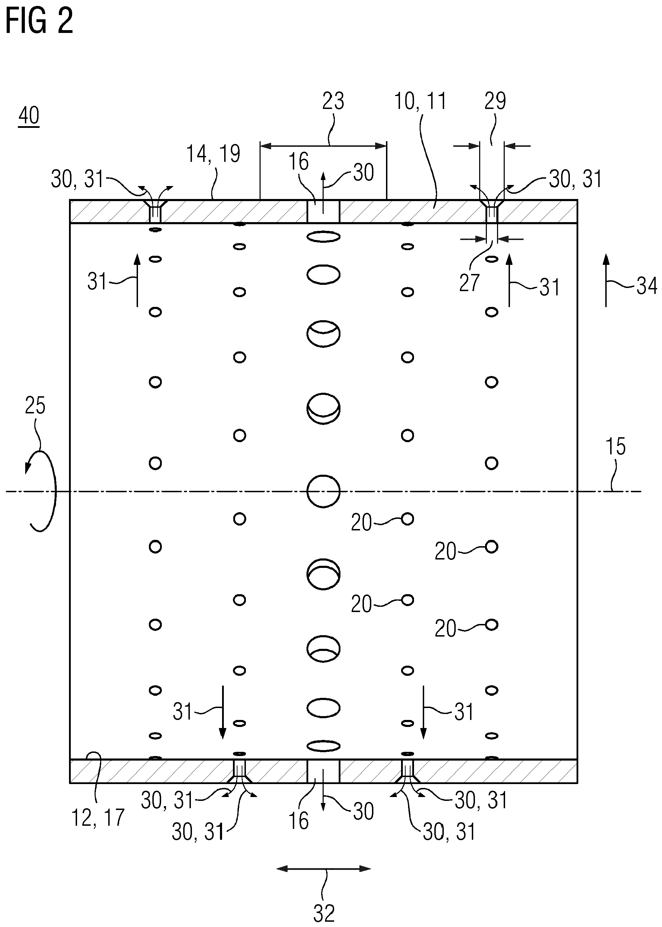

Ergänzend zu FIG 1 ist in FIG 2 die erste Ausführungsform der beanspruchten Gleitlagerbuchse 10 in einem Längsschnitt dargestellt. Zumindest eine der Austauchbohrungen 20 weist an der ersten Mantelfläche 12, also der Innenseite 17, einen ersten Durchmesser 27 auf, in den der Schmierstoff 30 im bestimmungsgemäßen Betrieb des Gleitlagers 40 eintritt. An der zweiten Mantelfläche 14, also der Außenfläche 19, weist die zumindest eine Austauschbohrung 20 einen zweiten Durchmesser 29 auf, der größer ist als der erste Durchmesser 27. Beim Durchtritt durch die zumindest eine Austauschbohrung 20 wird eine Strömungsgeschwindigkeit 31 des Schmierstoffs 30 verringert. Die Unterschiede in der Strömungsgeschwindigkeit 31 des Schmierstoffs 30 sind in FIG 2 durch unterschiedlich lange Pfeile versinnbildlicht. Die zumindest eine Austauschbohrung 20 weist im Bereich der zweiten Mantelfläche 14 eine Ansenkung 36 auf, durch die ein Strömungsquerschnitt in der Austauschbohrung 20 erhöht wird, und so die Strömungsgeschwindigkeit 31 reduziert.

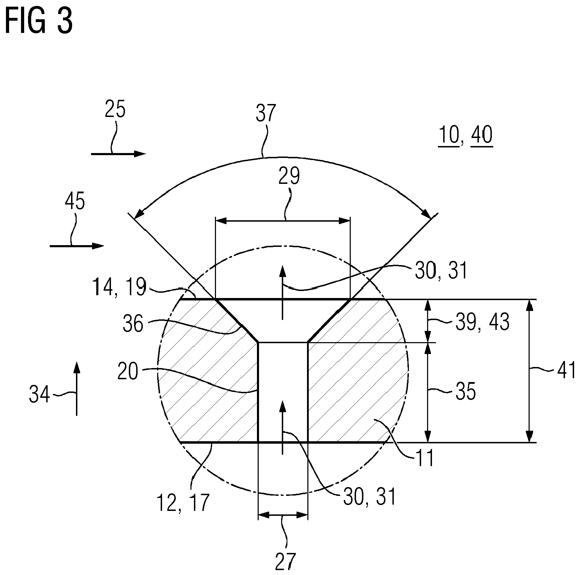

Die erste Ausführungsform der beanspruchten Gleitlagerbuchse 10 gemäß FIG 1 und FIG 2 ist in FIG 3 in einer Detailansicht in einer Schnittdarstellung gezeigt. Die Austauschbohrung 20 ist als Ansenkung 36 ausgebildet weist einen Einlassabschnitt 35 mit dem erste Durchmesser 27 und einen daran angrenzenden bzw. darin übergehenden Auslassabschnitt 39 auf, der im Bereich der zweiten Mantelfläche 14 einen zweiten Durchmesser 29 aufweist. Die Länge 43 des Auslassabschnitts 39 entspricht 10% bis 100% einer Bohrlänge 41 der Austauschbohrung 20. Die Länge 43 des Auslassabschnitts 39 stellt im Wesentlichen eine Abmessung der Absenkung 36 entlang der Radialrichtung 34 dar. Eine derartige Länge 43 des Auslassabschnitts 39 wird eine hinreichende Verringerung der Strömungsgeschwindigkeit 31 des Schmierstoffs 30 hervorgerufen, durch den sich an der zweiten Mantelfläche 14 eine Schleppkraft 45 auf die Gleitlagerbuche 10 einstellt. Durch die Schleppkraft 45 wird eine Schleppwirkung hervorgerufen, durch die die Gleitlagerbuchse 10 einer Drehbewegung 25 des Gleitlagers 40 folgt. Durch den zweiten Durchmesser 39, den Öffnungswinkel 37 und die Länge 43 des Auslassabschnitts 39 wird eine erhöhte Schleppkraft 45 hervorgerufen. Die Ansenkung 36 ist mittels eines Kegelsenkers in kosteneffizienter Weise herstellbar.

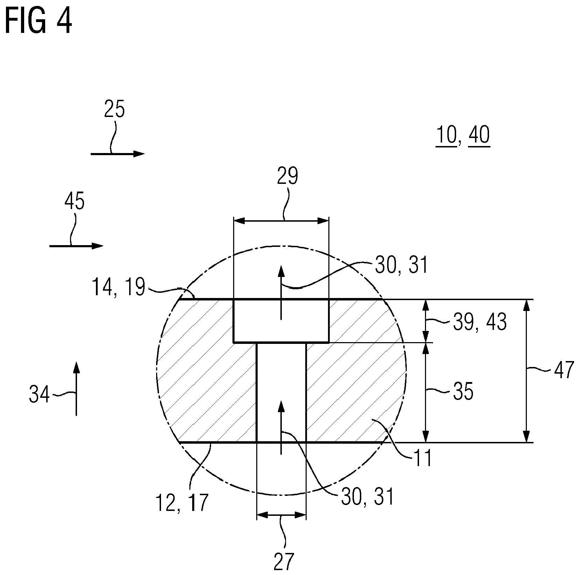

Eine zweite Ausführungsform der beanspruchten Gleitlagerbuchse 10 ist in FIG 4 in einer Detailansicht in einer Schnittdarstellung gezeigt. Die Ausführungsform nach FIG 4 ist auch mit der Ausführungsform nach FIG 1, FIG 2 und FIG 3 kombinierbar. Die Austauschbohrung 20 ist im Wesentlichen als Stufenbohrung 38 ausgebildet und weist einen Einlassabschnitt 35 mit dem ersten Durchmesser 27 und einen daran angrenzenden bzw. darin übergehenden Auslassabschnitt 39 mit dem zweiten Durchmesser 29 auf. Die Länge 43 des Auslassabschnitts 39 entspricht 10% bis 100% einer Bohrlänge 47 der Austauschbohrung 20. Die Länge 43 des Auslassabschnitts 39 stellt im Wesentlichen eine Abmessung der Stufenbohrung 38 entlang der Radialrichtung 34 dar. Eine derartige Länge 43 des Auslassabschnitts 39 wird eine hinreichende Verringerung der Strömungsgeschwindigkeit 31 des Schmierstoffs 30 hervorgerufen, durch den sich an der zweiten Mantelfläche 14 eine Schleppkraft 45 auf die Gleitlagerbuche 10 einstellt. Durch die Schleppkraft 45 wird eine Schleppwirkung hervorgerufen, durch die die Gleitlagerbuchse 10 einer Drehbewegung 25 des Gleitlagers 40 folgt. Durch den zweiten Durchmesser 39 und die Länge 43 des Auslassabschnitts 39 wird eine erhöhte Schleppkraft 45 hervorgerufen.

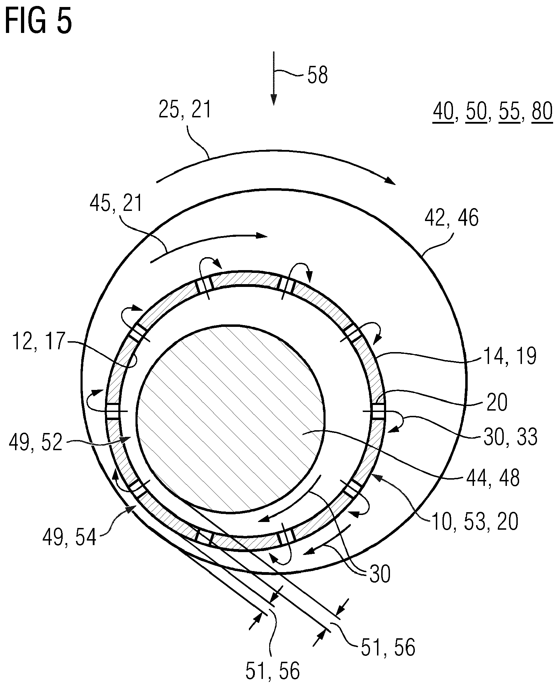

In FIG 5 ist schematisch eine Ausführungsform eines beanspruchten Gleitlagers 40 im Querschnitt dargestellt, das in einem nicht näher gezeigten Planetengetriebe 50 eingesetzt wird. Das Gleitlager 40 umfasst als rotierende Komponente 42 ein Planetenrad 46, das drehbar an einem Planetenträger 55 des Planetengetriebes 50 angeordnet ist. Ferner umfasst das Gleitlager 40 als stationäre Komponente 44 eine Achse 48, die drehfest mit dem Planetenträger 55 verbunden ist. Durch die stationäre Komponente 44 wird Schmierstoff 30 über eine Schmierstoffzufuhr 33 zum Gleitlager 40 transportiert. Die Schmierstoffzufuhr 44 ist als nicht näher gezeigte Schmierstoffkanäle ausgebildet. Das Gleitlager 40 umfasst auch eine Gleitlagerbuchse 10, die als Schwimmbuchse 53 ausgebildet ist. Die Gleitlagerbuchse 10 ist zwischen der stationären Komponente 44 und der rotierenden Komponente 42 angeordnet, so dass sich zwischen diesen paarweise jeweils ein Schmierspalt 49 bildbar ist. Durch eine Drehbewegung 25 der rotierenden Komponente 42 wird Schmierstoff 30 in einen Außenschmierspalt 54 zwischen der Gleitlagerbuchse 10 und der rotierenden Komponente 42 gefördert. In Abhängigkeit von einer Geschwindigkeit der Drehbewegung 25 stellt sich am Außenschmierspalt 54 eine Schmierspalthöhe 51 ein. Die Gleitlagerbuchse 10 ist mit Austauschbohrungen 20 versehen, durch die Schmierstoff 30 im Bereich des Außenschmierspalts 54 austritt. Dadurch wird eine Schleppkraft 45, also ein Schleppwirkung, auf die Gleitlagerbuchse 10 ausgeübt, so dass die Gleitlagerbuchse 10 der Drehbewegung 25 der rotierenden Komponente 42 enger folgt. Die sich so ergebende Gleitbuchsendrehzahl 18 ist geringer als eine Drehzahl 21 der rotierenden Komponente 42. Zwischen der stationären Komponente 44 und der Gleitlagerbuchse 10 wird ein Innenschmierspalt 52 gebildet, der in Abhängigkeit von der Gleitbuchsendrehzahl 21 eine Schmierspalthöhe 51 aufweist. Die Gleitlagerbuchse 10 ist mit Austauschbohrungen 20, wie in FIG 3 oder FIG 4 dargestellt, versehen, so dass auf die Gleitlagerbuchse 10 im bestimmungsgemäßen Betrieb des Gleitlagers 40 eine gesteigerte Schleppkraft 45 im Außenschmierspalt 54 ausgeübt wird. Infolgedessen wird die Schmierfilmhöhe 51 am Außenschmierspalt 54 und/oder am Innenschmierspalt 52 erhöht. Je höher die Schmierspalthöhe 51 am Innenschmierspalt 52 und/oder am Außenschmierspalt 54 ist, umso höher ist eine Tragfähigkeit 56 des Gleitlagers 40. Die Tragfähigkeit 56 stellt ein Maß dafür dar, mit betragsmäßig welchen Radialbeanspruchungen 58 das Gleitlager 40 bestimmungsgemäß belastbar ist. Durch die beanspruchte Gleitlagerbuchse 10, die als Schwimmbuchse 53 ausgebildet ist, wird die Tragfähigkeit 56 des Gleitlagers 40 gesteigert. Die gleiche Wirkung, wie beim Außenschmierspalt 54, ist auch beim Innenschmierspalt 52 erzielbar, wenn die Strömungsrichtung des Schierstoffs 30 vorübergehend umgekehrt ist. Die Gleitlagerbuchse 10 ist ferner in einem Computerprogrammprodukt 80 abgebildet, das dazu ausgebildet ist, das Betriebsverhalten der Gleitlagerbuchse 10 im Betrieb des Gleitlagers 40 zu simulieren.

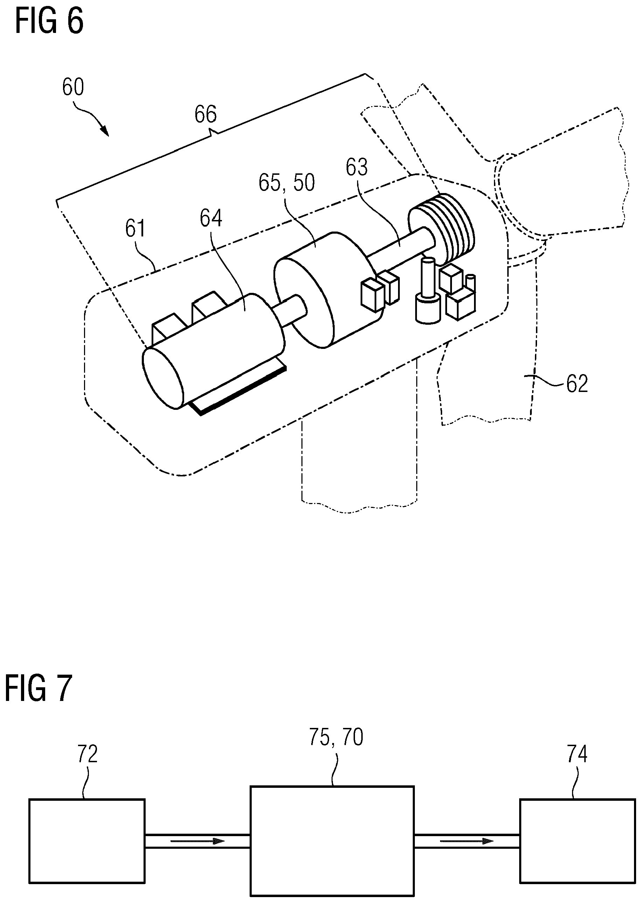

FIG 6 zeigt in einer geschnittenen Schrägansicht eine Ausführungsform der beanspruchten Windkraftanlage 60, die eine Gondel 61 umfasst, an der ein Mehrblattrotor 62 drehbar angebracht ist. In der Gondel 61 ist ein Antriebsstrang 66 der Windkraftanlage 60 aufgenommen, der eine Hauptwelle 63 umfasst, die drehmomentübertragend mit dem Mehrblattrotor 62 verbunden ist. Der Antriebsstrang 66 umfasst auch einen Generator 64, der über ein Getriebe 65 drehmomentübertragend mit der Hauptwelle 63 verbunden ist. Das Getriebe 65 ist dabei als Planetengetriebe 50 gemäß einer der oben beschriebenen Ausführungsformen ausgebildet.

Eine Ausführungsform der beanspruchten Industrie-Applikation 70 ist in FIG 7 schematisch dargestellt. Die Industrie-Applikation 70 umfasst eine Abtriebseinheit 72, die beispielsweise als Elektromotor, Windkraftanlage, Verbrennungsmotor oder Hydraulikmotor ausgebildet sein kann. Durch die Antriebseinheit 72 wird eine Antriebsleistung, also eine Drehbewegung 25, zur Verfügung gestellt, die einem Getriebe 75 zugeführt wird. Unter Wandlung der vorliegenden Drehzahl und des vorliegenden Drehmoments wird die Antriebsleistung einer Abtriebseinheit 74 zugeführt. Die Abtriebseinheit 84 kann beispielsweise als mechanische Anwendung ausgebildet sein, so dass die Industrie-Applikation 70 als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Rührzerkleinerer, Hubvorrichtung, Müllpresse oder Schrottpresse ausgebildet ist. Erfindungsgemäß ist das Getriebe 75, über das die Antriebseinheit 72 mit der Abtriebseinheit 74 verbunden ist, Als Planetengetriebe 50 nach einer der oben skizzierten Ausführungsformen ausgebildet. Dementsprechend ist das Getriebe 75 mit zumindest einem Gleitlager 40 nach einer der oben dargestellten Ausführungsformen versehen und verfügt über eine Gleitlagerbuchse 10 gemäß zumindest einer der oben beschriebenen Ausführungsformen.

## Patentansprüche

1. Gleitlagerbuchse (10), umfassend einen zylindrischen Grundkörper (11) mit einer ersten Mantelfläche (12) und einer zweiten Mantelfläche (14), der eine Mehrzahl an Austauschbohrungen (20) für einen Schmierstoff (30) aufweist, wobei zumindest eine der Austauschbohrungen (20) an der ersten Mantelfläche (12) einen ersten Durchmesser (27) aufweist und an der zweiten Mantelfläche (14) einen zweiten Durchmesser (29), **dadurch gekennzeichnet, dass** der zweite Durchmesser (29) zu einer Steigerung einer Tragfähigkeit (56) der Gleitlagerbuchse (10) größer ist als der erste Durchmesser (27).

2. Gleitlagerbuchse (10) nach Anspruch 1, **dadurch gekennzeichnet, dass** die erste Mantelfläche (12) einer Schmierstoffzufuhr (33) zugewandte Seite der Gleitlagerbuchse (10) ist.

3. Gleitlagerbuchse (10) nach Anspruch 1 oder 2, **da- durch gekennzeichnet**, dass der zweite Durchmesser (29) durch eine Ansenkung (36) und/oder eine Stufenbohrung (38) ausgebildet ist.

4. Gleitlagerbuchse (10) nach einem der Ansprüche 1 bis 3, **dadurch gekennzeichnet, dass** die zumindest eine Austauschbohrung (20) axial versetzt zu einer Schmierstoffzufuhröffnung angeordnet ist.

5. Gleitlagerbuchse (10) nach einem der Ansprüche 1 bis 4, **dadurch gekennzeichnet, dass** zwei axial beabstandete Austauschbohrungen (20) an der Außenfläche (19) durch eine Taschenvertiefung (28) miteinander verbunden sind.

6. Gleitlagerbuchse (10) nach Anspruch 5, **dadurch gekennzeichnet, dass** mehrere Taschenvertiefungen (28) ausgebildet sind, die in einem umlaufenden Pfeilmuster (26) angeordnet sind.

7. Gleitlagerbuchse (10) nach einem der Ansprüche 1 bis 6, **dadurch gekennzeichnet, dass** der zweite Durchmesser (29) dem 1,05-fachen bis 6,00-fachen des ersten Durchmessers (27) entspricht.

8. Gleitlagerbuchse (10) nach einem der Ansprüche 1 bis 7, **dadurch gekennzeichnet, dass** die Gleitlagerbuchse (10) als Schwimmbuchse (53) ausgebildet ist.

9. Gleitlagerbuchse (10) nach einem der Ansprüche 1 bis 8, **dadurch gekennzeichnet, dass** ein Auslassabschnitt (39) mit dem zweiten Durchmesser (29) der zumindest einen Austauschbohrung (20) 10% bis 100% einer Bohrlänge (41) der zumindest einen Austauschbohrung (20) ausbildet.

10. Gleitlagerbuchse (10) nach einem der Ansprüche 3 bis 9, **dadurch gekennzeichnet, dass** die Ansenkung (36) einen Öffnungswinkel (37) von 45° bis 135° aufweist.

11. Gleitlager (40), umfassend eine stationäre Komponente (44), auf der eine Gleitlagerbuchse (10) angeordnet ist, und eine rotierende Komponente (42), die drehbar auf der Gleitlagerbuchse (10) angebracht ist, **dadurch gekennzeichnet, dass** die Gleitlagerbuchse (10) nach einem der Ansprüche 1 bis 10 ausgebildet ist.

12. Gleitlager (40) nach Anspruch 11, **dadurch gekennzeichnet, dass** das Gleitlager (40) eine Sommerfeldzahl von 0,10 bis 10,00 aufweist.

13. Planetengetriebe (50), umfassend einen Planetenträger (55), in dem eine Mehrzahl an Planetenrädern (46) mittels jeweils eines Gleitlagers (40) drehbar angeordnet ist, **dadurch gekennzeichnet, dass** zumindest eines der Gleitlager (40) nach Anspruch 11 oder 12 ausgebildet ist.

14. Windkraftanlage (60), umfassend eine Gondel (61), in der ein Getriebe (65) drehmomentübertragend mit einem Generator (64) verbunden ist, **dadurch gekennzeichnet, dass** das Getriebe (65) als Planetengetriebe (50) nach Anspruch 13 ausgebildet ist.

15. Industrie-Applikation (70), umfassend eine Antriebseinheit (72) und eine Abtriebseinheit (74), die über ein Getriebe (75) miteinander verbunden sind, **dadurch gekennzeichnet, dass** das Getriebe (75) als Planetengetriebe (50) nach Anspruch 13 ausgebildet ist.

16. Computerprogrammprodukt (80) zum Simulieren eines Betriebsverhaltens einer Gleitlagerbuchse (10), die in einem Gleitlager (40) angeordnet ist, **dadurch gekennzeichnet, dass** die Gleitlagerbuchse (10) nach einem der Ansprüche 1 bis 10 ausgebildet ist.
